# EUROPÄISCHE PATENTANMELDUNG

(11) **EP 1 950 539 A2**
(43) Veröffentlichungstag der Anmeldung: **30.07.2008**
(21) Anmeldenummer: 08100322.0
(22) Anmeldetag: 10.01.2008
(51) Int. Cl.: G01G 19/08, G01G 23/00

(54) **Überladungserfassungssystem**

(30) Priorität: 29.01.2007 DE 102007004395
(71) Anmelder: Continental Automotive GmbH, 30165 Hannover (DE)
(72) Erfinder: Henrich, Norbert, 60529, Frankfurt (DE); Ohm, Heinz-Friedrich, 64331, Weiterstadt (DE)

(57) **Zusammenfassung**

Die Erfindung bezieht sich auf ein Überladungserfassungssystem für Kraftfahrzeuge, mit einer Erfassungseinrichtung zum Erfassung oder Ermitteln der Fahrzeugmasse, mit einer Zentralelektronik 1, der von der Erfassungseinrichtung ein Signal entsprechend der ermittelten Fahrzeugmasse zuleitbar ist, das in der Zentralelektronik 1 mit einem gespeicherten Massemaximalwert vergleichbar ist sowie mit einer optischen Anzeige 7, die bei Überschreitung des Massemaximalwertes durch den erfassten Massewert zur optischen Darstellung der Massemaximalwertüberschreitung ansteuerbar ist. Die Zentralelektronik 1 weist einen Speicher zur Speicherung der Information der Überschreitung des Massemaximalwertes sowie eines Quittiersignals eines manuell betätigbaren Quittierschalters 6 auf.

## Beschreibung

Die Erfindung bezieht sich auf ein Überladungserfassungssystem für Kraftfahrzeuge, insbesondere für Nutzkraftfahrzeuge, mit einer Erfassungseinrichtung zum Erfassen oder Ermitteln der Fahrzeugmasse, mit einer Zentralelektronik, der von der Erfassungseinrichtung ein Signal entsprechend der ermittelten Fahrzeugmasse zuleitbar ist, das in der Zentralelektronik mit einem gespeicherten Massemaximalwert vergleichbar ist, sowie mit einer optischen Anzeige, die bei Überschreitung des Massemaximalwertes durch den erfassten Massewert zur optischen Darstellung der Massemaximalwertüberschreitung ansteuerbar ist.

Das Überladen von Nutzfahrzeugen stellt ein häufig auftretendes Problem dar. Oft ist sich der Fahrer der Überladungssituation des Fahrzeugs nicht bewusst, insbesondere dann, wenn er nicht selbst die Beladung vorgenommen oder überwacht hat.

Überladungserfassungssysteme der eingangs genannten Art sind bekannt. Damit hat der Fahrer zwar die Möglichkeit eine Überladung festzustellen. Es ist aber nachträglich nicht feststellbar, ob er die unbedenkliche Fahrtüchtigkeit seines Kraftfahrzeugs überprüft und sich entsprechend korrekt verhalten hat.

Aufgabe der Erfindung ist es daher ein Überladungserfassungssystem der eingangs genannten Art zu schaffen, durch das eine Überprüfung der Fahrtüchtigkeit des Fahrzeugs durch den Fahrer nachweisbar ist.

Diese Aufgabe wird erfindungsgemäß dadurch gelöst, dass die Zentralelektronik einen Speicher zur Speicherung der Information der Überschreitung des Massemaximalwertes sowie eines Quittiersignals eines manuell betätigbaren Quittierschalters aufweist.
Dabei kann der Speicher in der Zentralelektronik integriert aber auch separat angeordnet sein.

Hierbei wird die Masse des Fahrzeugs mit dem zulässigen Gesamtgewicht verglichen und sowohl dieses Ergebnis als auch die Kenntnisnahme durch den Fahrer dokumentiert.

Durch diese Ausbildung ist der Fahrer immer nachweislich in eine Entscheidung des Fahrens mit Überlast einbezogen und somit für sich daraus ergebende Konsequenzen verantwortlich machbar.

Treten durch Überladung Schäden am Fahrzeug auf, für die normalerweise Gewährleistungsansprüche an den Fahrzeughersteller bestehen, können diese wegen nachweislich unsachgemäßem Gebrauch des Kraftfahrzeugs zurückgewiesen werden.

Die Erfassungseinrichtung zum Erfassen oder Ermitteln der Fahrzeugmasse kann eine Sensorik zur Erfassung der Achslast des Kraftfahrzeugs und/oder eine elektronische Fahrwerksregelung und/oder eine elektronische Bremsregelung (ABS) und/oder eine Getriebesteuerungselektronik sein.

Werden der Zentralelektronik die Informationen mehrerer Erfassungseinrichtungen zugeführt, wird eine Redundanz dieser Informationen und somit eine erhöhte Sicherheit der Funktion des Überladungserfassungssystems erreicht.

Eine zusätzliche zeitliche Zuordnung eines Fahrens mit Überlast wird dadurch dokumentiert, dass dem Speicher von einer Datum- und Zeiterfassungseinheit Datum- und Zeitinformationen der Erfassung der Information der Überschreitung des Massemaximalwertes zuleitbar und speicherbar sind.

Weiterhin kann dadurch, dass dem Speicher von der Datum- und Zeiterfassungseinheit Datum- und Zeitinformationen zur Erfassung des Quittiersignals zuleitbar und speicherbar sind, der Zeitpunkt der Kenntnisnahme der Überlast durch den Fahrer dokumentiert werden.

Zur Sicherung der gespeicherten Daten ist vorzugsweise der Speicher ein nichtflüchtiger Speicher.

Ist bei Überschreitung des Massemaximalwertes durch den erfassten Massewert durch die Zentralelektronik ein akustisches Warnsignal auslösbar, so erfolgt neben der optischen Information noch eine akustische Warnung des Fahrers, dass eine Überladung des Fahrzeugs vorliegt.

Zu einer kostengünstigen Doppelfunktion führt es, wenn die Zentralelektronik Teil eines Tachographen oder einer On-Bord-Einheit eines Mautgerätes ist.

Außerdem werden Missbrauchssicherungen von Tachographen und On-Bord-Einheiten von Mautgeräten zur Missbrauchssicherung der Überlastungsdaten mitgenutzt.

Ist die Information der Überschreitung des Massemaximalwertes oder eine Information über das Gesamtgewicht des Kraftfahrzeugs einem Navigationsgerät zuleitbar, so kann die Information einer Überlast auch bei der Streckenberechnung durch das Navigationsgerät berücksichtigt werden. So können z. B. Strecken, auf denen begrenzt belastbare Brücken vorhanden sind, vermieden werden.

Sollen die Informationen einer Überladung zu weiteren Zwecken genutzt werden, kann dazu die Zentralelektronik einen Ausgabeanschluss besitzen, über den die Information der Überschreitung des Massemaximalwertes abrufbar ist, wobei vorzugsweise auch über den Ausgabeanschluss die Datum- und Zeitinformation der Erfassung der Überschreitung des Massemaximalwertes und/oder die Information über das Quittiersignal abrufbar sind.

Sind die Information der Überschreitung des Massemaximalwertes und/oder die Datum- und Zeitinformation der Erfassung der Überschreitung des Massemaximalwertes und/oder die Information über das Quittiersignal einer Telematikeinheit zuführbar und von der Telematikeinheit abrufbar, so können diese Informationen von der Zentrale eines Flottenbetreibers, zu dessen Flotte das Kraftfahrzeug gehört, abgerufen und bei der Betriebsplanung der Flotte genutzt werden.

Weiterhin können Behörden wie z. B. das Bundesamt für Güterverkehr (BAG) diese Informationen abrufen und bei einem Fahren mit Überlast eingreifen. Dies kann sogar durch Kontrollfahrzeuge während der Fahrt vorgenommen werden.

Zur Reduzierung der Gefahr durch Fahren mit Überlast kann die Information der Überschreitung des Massemaximalwertes einer Motorsteuerungselektronik und/oder einer Getriebesteuerungselektronik zuführbar sein und von der Motorsteuerungselektronik ein Antriebsstrang des Kraftfahrzeugs geschwindigkeitsbegrenzend und/oder leistungsmindernd sowie von der Getriebesteuerungselektronik ein Getriebe auf einen niedrigen Gang begrenzt schaltbar ansteuerbar sein.

Dies kann darin bestehen, dass nur noch in einem Notfahrbetrieb gefahren aber auch ein Anfahren des Kraftfahrzeugs verhindert werden kann und ein Fahren nur in einem niedrigen Gang möglich ist.

Eine weitere Möglichkeit der Nutzung der Überlastinformationen kann darin bestehen, dass die Information der Überschreitung des Massemaximalwertes einer Fahrwerkregelung zuführbar ist und von der Fahrwerkregelung eine Dämpfersteuerung und/oder eine Niveauregelung ansteuerbar ist.

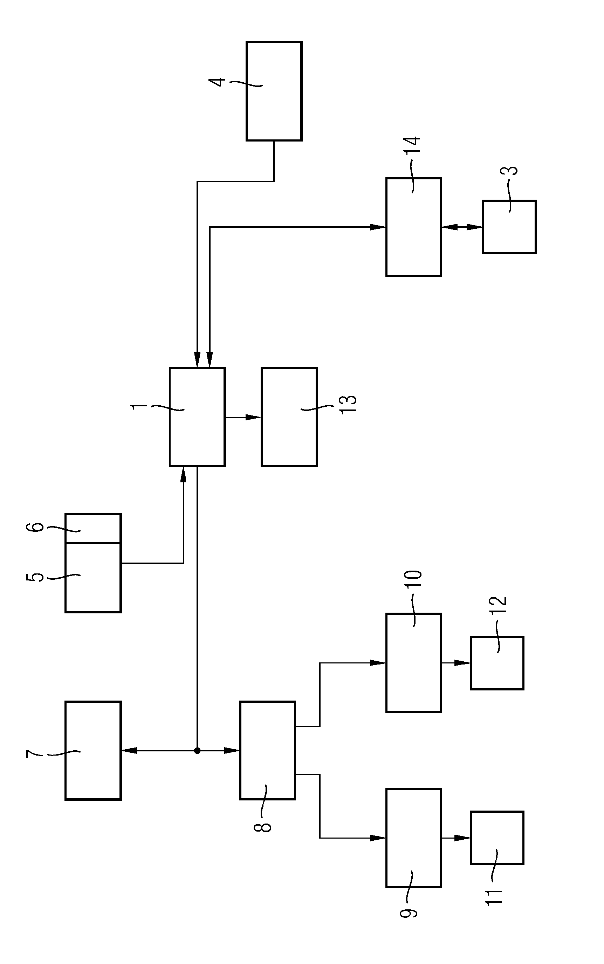

Ein Ausführungsbeispiel der Erfindung ist in der Zeichnung dargestellt und wird im Folgenden näher beschrieben. Die einzige Figur der Zeichnung zeigt ein Blockschaltbild eines Überladungserfassungssystems.

Eine Zentralelektronik 1 eines Kraftfahrzeugs enthält einen nichtflüchtigen Speicher und eine Datum- und Zeiterfassungseinheit.

Weiterhin erhält die Zentralelektronik 1 von einem Geschwindigkeitssensor 4 ein Geschwindigkeitssignal entsprechend der jeweiligen gefahrenen Geschwindigkeit zugeführt.

Von einem Bedienfeld 5, das einen Quittierschalter 6 enthält, wird ein Quittiersignal der Zentralelektronik 1 zugeleitet.

In der Zentralelektronik 1 ist ein Massemaximalwert des Kraftfahrzeugs gespeichert. Er kann fest gespeichert sein, es ist aber auch möglich, dass dieser Wert über das Bedienfeld 5 von einer dazu autorisierten Person eingegeben werden kann.

Eine Fahrwerksregelung 14 erhält aus einer Sensorik 3 ein Signal, aus dem ein Fahrzeugmassesignal generiert und der Zentralelektronik zugeführt wird.

Nach Erfassung der tatsächlichen Fahrzeugmasse entsprechend der Information der Fahrwerksregelung 14 wird in der Zentralelektronik 1 dieser Massewert mit dem gespeicherten Massemaximalwert verglichen.

Überschreitet der Massewert den Massemaximalwert, wird diese Differenz in dem nichtflüchtigen Speicher der Zentralelektronik 1 gespeichert. Gleichzeitig werden auch die von der Datum- und Zeiterfassungseinheit generierten Daten in dem nichtflüchtigen Speicher gespeichert. Dabei wird bei Vorliegen eines Geschwindigkeitssignals an dem Geschwindigkeitssensor 4 auch die tatsächliche Fahrzeit des Kraftfahrzeugs mit Überladung erfasst und gespeichert.

Sowohl der den Massemaximalwert überschreitende Massewert als auch die Datum- und Zeitdaten sind nun einer optischen Anzeige zuleitbar und dort darstellbar.

Will nun der Fahrer das Kraftfahrzeug in Betrieb nehmen, muss er zunächst den Quittierschalter 6 betätigen. Das dabei erzeugte Quittiersignal wird zum einen der Zentralelektronik 1 zugeführt und dort mit den dazugehörenden Datum- und Zeitdaten im nichtflüchtenden Zeitspeicher gespeichert.

Weiterhin löst das Quittiersignal die Darstellung des den Massemaximalwert überschreitenden Massewerts an der Anzeige 7 aus, so dass der Fahrer diesen Wert ablesen kann und somit über die Überladung des Kraftfahrzeugs informiert ist.

Ein Signal entsprechend dem den Massemaximalwert überschreitenden Massewert wird auch von der Zentralelektronik 1 einer Fahrzeugssteuereinheit 8 zugeführt, die ein davon beeinflusstes Signal einer Motorsteuerungselektronik 9 und einer Getriebesteuerungselektronik 10 zuleitet.

Dies führt dazu, dass der von der Motorsteuerungselektronik 9 angesteuerte Motor 11 nur bis zu einer begrenzten Fahrgeschwindigkeit des Kraftfahrzeugs oder nur im Notfahrbetrieb ansteuerbar und das von der Getriebesteuerungselektronik 10 angesteuerte Getriebe 12 nur in den ersten oder zweiten Gang schaltbar ist.

Weiterhin wird ein dem den Massemaximalwert überschreitenden Massewert entsprechendes Signal von der Zentralelektronik 1 einer Telematikeinheit 13 zugeführt.

Eine entsprechende Information ist von der Telematikeinheit 13 abrufbar.

## Patentansprüche

1. Überladungserfassungssystem für Kraftfahrzeuge, insbesondere für Nutzkraftfahrzeuge, mit einer Erfassungseinrichtung zum Erfassen oder Ermitteln der Fahrzeugmasse, mit einer Zentralelektronik, der von der Erfassungseinrichtung ein Signal entsprechend der ermittelten Fahrzeugmasse zuleitbar ist, das in der Zentralelektronik mit einem gespeicherten Massemaximalwert vergleichbar ist, sowie mit einer optischen Anzeige, die bei Überschreitung des Massemaximalwertes durch den erfassten Massewert zur optischen Darstellung der Massemaximalwertüberschreitung ansteuerbar ist, **dadurch gekennzeichnet, dass** die Zentralelektronik (1) einen Speicher zur Speicherung der Information der Überschreitung des Massemaximalwertes sowie eines Quittiersignals eines manuell betätigbaren Quittierschalters (6) aufweist.

2. Überladungserfassungssystem nach Anspruch 1, **dadurch gekennzeichnet, dass** die Erfassungseinrichtung zum Erfassen oder Ermitteln der Fahrzeugmasse eine Sensorik zur Erfassung der Achslast des Kraftfahrzeugs und/oder eine elektronische Fahrwerksregelung (14) und/oder eine elektronische Bremsregelung (ABS) und/oder eine Getriebesteuerungselektronik (10) ist.

3. Überladungserfassungssystem nach einem der vorhergehenden Ansprüche, **dadurch gekennzeichnet, dass** dem Speicher von einer Datum- und Zeiterfassungseinheit Datum- und Zeitinformationen der Erfassung der Information der Überschreitung des Massemaximalwertes zuleitbar und speicherbar sind.

4. Überladungserfassungssystem nach Anspruch 3, **dadurch gekennzeichnet, dass** dem Speicher von der Datum- und Zeiterfassungseinheit Datum- und Zeitinformationen der Erfassung des Quittiersignals zuleitbar und speicherbar sind.

5. Überladungserfassungssystem nach einem der vorhergehenden Ansprüche, **dadurch gekennzeichnet, dass** der Speicher ein nichtflüchtiger Speicher ist.

6. Überladungserfassungssystem nach einem der vorhergehenden Ansprüche, **dadurch gekennzeichnet**, **das**s bei Überschreitung des Massemaximalwertes durch den erfassten Massewert durch die Zentralelektronik (1) ein akustisches Warnsignal auslösbar ist.

7. Überladungserfassungssystem nach einem der vorhergehenden Ansprüche, **dadurch gekennzeichnet, dass** die Zentralelektronik Teil eines Tachographen oder einer On-Bord-Einheit eines Mautgeräts ist.

8. Überladungserfassungssystem nach einem der vorhergehenden Ansprüche, **dadurch gekennzeichnet, dass** die Information der Überschreitung des Massemaximalwertes einem Navigationsgerät zuleitbar ist.

9. Überladungserfassungssystem nach einem der vorhergehenden Ansprüche, **dadurch gekennzeichnet, dass** eine Information über das Gesamtgewicht des Kraftfahrzeugs einem Navigationsgerät zuleitbar ist.

10. Überladungserfassungssystem nach einem der vorhergehenden Ansprüche, **dadurch gekennzeichnet, dass** die Zentralelektronik (1) einen Ausgabeanschluss besitzt, über den die Information der Überschreitung des Massemaximalwertes abrufbar ist.

11. Überladungserfassungssystem nach Anspruch 10, **dadurch gekennzeichnet, dass** über den Ausgabeanschluss die Datum- und Zeitinformation der Erfassung der Überschreitung des Massemaximalwertes und/oder die Information über das Quittiersignal abrufbar sind.

12. Überladungserfassungssystem nach einem der vorhergehenden Ansprüche, **dadurch gekennzeichnet, dass** die Information der Überschreitung des Massemaximalwertes und/oder die Datum- und Zeitinformation der Erfassung der Überschreitung des Massemaximalwertes und/oder die Information über das Quittiersignal einer Telematikeinheit (13) zuführbar und von der Telematikeinheit (13) abrufbar sind.

13. Überladungserfassungssystem nach einem der Ansprüche 10 und 11, **dadurch gekennzeichnet, dass** die Information der Überschreitung des Massemaximalwertes einer Motorsteuerungselektronik (9) und/oder einer Getriebesteuerungselektronik (10) zuführbar ist und von der Motorsteuerungselektronik (9) ein Antriebsstrang des Kraftfahrzeugs geschwindigkeitsbegrenzend und/oder leistungsmindernd sowie von der Getriebesteuerungselektronik (10) ein Getriebe auf einen niedrigen Gang begrenzt schaltbar ansteuerbar ist.

14. Überladungserfassungssystem nach einem der Ansprüche 10 und 11, **dadurch gekennzeichnet, dass** die Information der Überschreitung des Massemaximalwertes einer Fahrwerkregelung (14) zuführbar ist und von der Fahrwerkregelung (14) eine Dämpfersteuerung und/oder eine Niveauregelung ansteuerbar ist.
